(19) **Europäisches Patentamt** / **European Patent Office** / **Office européen des brevets**

(11) **EP 4 251 794 B1**

(12) **EUROPÄISCHE PATENTSCHRIFT**

(45) Veröffentlichungstag und Bekanntmachung des Hinweises auf die Patenterteilung:
**21.01.2026 Patentblatt 2026/04**

(21) Anmeldenummer: **21799027.4**

(22) Anmeldetag: **25.10.2021**

(51) Internationale Patentklassifikation (IPC):
**D02G 3/48** [(2006.01)]  **D01F 6/92** [(2006.01)]

(52) Gemeinsame Patentklassifikation (CPC):
**D02G 3/48; B60C 9/0042; D01F 6/92;**
B60C 2009/0466; D10B 2331/04

(86) Internationale Anmeldenummer:
**PCT/EP2021/079488**

(87) Internationale Veröffentlichungsnummer:
**WO 2022/111927 (02.06.2022 Gazette 2022/22)**

(54) **GUMMIERTER FESTIGKEITSTRÄGER FÜR ELASTOMERE ERZEUGNISSE, INSBESONDERE FAHRZEUGREIFEN, WOBEI DER FESTIGKEITSTRÄGER WENIGSTENS EIN ERSTES GARN AUFWEIST, VERFAHREN ZUR HERSTELLUNG DES GUMMIERTEN FESTIGKEITSTRÄGERS UND FAHRZEUGREIFEN AUFWEISEND WENIGSTENS EINEN GUMMIERTEN FESTIGKEITSTRÄGER**

RUBBERIZED REINFORCEMENT FOR ELASTOMERIC PRODUCTS, ESPECIALLY VEHICLE TYRES, WHEREBY THE REINFORCEMENT COMPRISES AT LEAST ONE FIRST YARN, METHOD FOR PRODUCING THE RUBBERIZED REINFORCEMENT AND VEHICLE TYRES COMPRISING AT LEAST ONE RUBBERIZED REINFORCEMENT

SUPPORT DE RENFORCEMENT CAOUTCHOUTÉ POUR PRODUITS ÉLASTOMÈRE, EN PARTICULIER PNEUS DE VÉHICULE, LE SUPPORT DE RENFORCEMENT COMPORTANT AU MOINS UN PREMIER FIL, PROCÉDÉ DE FABRICATION DE SUPPORT DE RENFORCEMENT CAOUTCHOUTÉ ET PNEUS DE VÉHICULE COMPORTANT AU MOINS UN SUPPORT DE RENFORCEMENT CAOUTCHOUTÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.11.2020 EP 20209683**

(43) Veröffentlichungstag der Anmeldung:
**04.10.2023 Patentblatt 2023/40**

(73) Patentinhaber: **Continental Reifen Deutschland GmbH**
**30175 Hannover (DE)**

(72) Erfinder:
• **KRAMER, Thomas**
**30165 Hannover (DE)**
• **NABIH, Nermeen**
**30165 Hannover (DE)**
• **REESE, Wolfgang**
**30165 Hannover (DE)**
• **SCHUNACK, Michael**
**30165 Hannover (DE)**

(74) Vertreter: **Continental Corporation**
**c/o Continental Reifen Deutschland GmbH**
**Intellectual Property Tires**
**Continental-Plaza 1**
**30175 Hannover (DE)**

(56) Entgegenhaltungen:
EP-A1- 2 708 380    WO-A1-2014/001039
CN-A- 108 084 424    KR-A- 20170 002 992

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen gummierten Festigkeitsträger für elastomere Erzeugnisse, insbesondere Fahrzeugreifen, wobei der Festigkeitsträger wenigstens ein erstes Garn aufweist, ein Verfahren zur Herstellung des gummierten Festigkeitsträgers und einen Fahrzeugreifen aufweisend wenigstens einen gummierten Festigkeitsträger.

Festigkeitsträger zur Verstärkung verschiedener elastomerer Erzeugnisse sind hinreichend bekannt. So ist für Fahrzeugreifen bekannt, dass diese meist in verschiedenen Bauteilen verschiedene Festigkeitsträger aufweisen, welche jeweils von einer Kautschukmischung, oder auch Gummierungsmischung genannt, umgeben sind. Die Festigkeitsträger sind somit als gummierte Festigkeitsträger im Fahrzeugreifen enthalten.

In solchen Bauteilen, in denen textile Festigkeitsträger verwendet werden, wird als Material des (textilen) Festigkeitsträgers oft Polyethylenterephthalat (PET) verwendet.

Es ist ebenso bekannt, dass PET mit speziellen Eigenschaften verwendet werden kann, wie beispielsweise das sogenannte HMLS-PET. Bei dem HMLS-PET handelt es sich um ein sogenanntes High Modulus Low Shrinkage Polyethylenterephthalat (HMLS-PET). HMLS-PET wird insbesondere in der Karkasslage von Fahrzeugluftreifen eingesetzt, um das Flatspot-Verhalten (= reversible plastische Abplattungen in der Bodenaufstandsfläche beim Parken) zu optimieren sowie extensive Seitenwandeinschnürungen zu vermeiden. Ferner ist man bestrebt, bei der Auswahl der Materialien für elastomere Erzeugnisse, wie Fahrzeugreifen, bestehende Zielkonflikte aus Nachhaltigkeit und Anforderungen an die Performance aufzulösen oder zumindest eine Verbesserung zu erzielen.

Die DE 102010017107 A1 offenbart einen Verstärkungscord, welcher wenigstens ein Garn aus recyceltem PET aufweist. Das recycelte PET kann insbesondere aus PET-Getränkeflaschen stammen.

CN 108 084 424 A offenbart ein HMLS-Garn, welches mittels einer Festphasen-Polymerisation gewonnen wird und als Ausgangsstoff aus Flaschen recyceltes PET einsetzt.

Allerdings sind der Verwendung von recyceltem PET aufgrund seiner Eigenschaften Grenzen gesetzt. So enthält recyceltes PET aus Flaschen Zusätze, die die Kristallisation während des Verarbeitungsprozesses, wie insbesondere des Spinn-Prozesses zu einem Industriegarn, beeinträchtigen. Hierdurch sind die physikalischen Eigenschaften gegenüber traditionellem PET, also PET, welches kein recyceltes PET ist, sondern originär hergestellt wurde, verschlechtert. Dies kommt insbesondere bei PET zum Tragen, an welches hohe Anforderungen hinsichtlich des Schrumpfes, der Deformierbarkeit und Dehnbarkeit (Stretch) sowie der Festigkeit gestellt wird.

Der vorliegenden Erfindung liegt daher die Aufgabe zugrunde, einen gummierten Festigkeitsträger für elastomere Erzeugnisse, insbesondere Fahrzeugreifen, wobei der Festigkeitsträger wenigstens ein erstes Garn aufweist, bereitzustellen, welcher eine hohe Festigkeit und eine hohe Dehnbarkeit aufweist und gleichzeitig möglichst ressourcenschonend, nachhaltig und umweltfreundlich produziert ist.

Gelöst wird diese Aufgabe dadurch, dass das erste Garn ein Garn aus HMLS-PET ist, welches recyceltes PET umfasst.

Bevorzugt umfasst das erste Garn 10 bis 100 Gew.-% recyceltes PET.

Das erste Garn aus HMLS-PET umfassend recyceltes PET, bevorzugt 10 bis 100 Gew.-% recyceltes PET, wird im Rahmen der vorliegenden Erfindung auch als "das erste Garn" bezeichnet.

Überraschenderweise konnte ein gummierter Festigkeitsträger aufweisend wenigstens ein Garn aus PET bereitgestellt werden, wobei das Garn recyceltes PET, bevorzugt 10 bis 100 Gew.-%, umfasst und gleichzeitig einen hohen Modul und damit eine hohe Festigkeit bei einem geringen Schrumpf aufweist und damit als HMLS-PET-Garn klassifiziert werden kann.

Der erfindungsgemäße Festigkeitsträger weist die Vorteile auf, dass er ressourcenschonender und umweltfreundlicher als originäres ("virgin") PET hergestellt ist und dennoch den hohen Anforderungen an die Eigenschaften, insbesondere für die Verwendung in elastomeren Erzeugnissen, wie in der Karkasslage von Fahrzeugreifen, genügt.

Die Gewichtsangaben in Prozent (Gew.-%) beziehen sich dabei auf das ungummierte und unvorbehandelte, d. h. insbesondere ungedippte, Garn.

Unter "recyceltem PET" wird im Rahmen der vorliegenden Erfindung PET verstanden, welches aus PET-Altprodukten wie PET-Flaschen oder anderen PET-Artikeln wie beispielsweise Bekleidung gewonnen wurde.

Das unmittelbare Ausgangsmaterial für recyceltes PET ist nicht Erdöl, sondern Flaschen oder andere Artikel aus PET.

Das bevorzugte Verfahren zur Gewinnung des recycelten PET mit den HMLS-Eigenschaften wird unten näher ausgeführt.

Weitere Vorteile und Merkmale des erfindungsgemäßen Festigkeitsträgers ergeben sich aus den Unteransprüchen, die sich auf vorteilhafte Ausgestaltungen der vorliegenden Erfindung beziehen und als solche nicht einschränkend zu verstehen sind. Von der Erfindung mit umfasst sind auch Kombinationen der Merkmale verschiedener Unteransprüche, soweit diese technisch möglich sind, auch wenn sich die Unteransprüche nicht aufeinander beziehen oder wenn diese verschiedenen Anspruchskategorien zugehören. Dies gilt auch für die einzelnen Merkmale der nachfolgend diskutierten Ausführungsbeispiele, soweit diese nicht für den Fachmann als zwingend zueinander gehörig erkennbar sind. Ebenfalls von der Erfindung mit umfasst sind Kombinationen von Merkmalen, die als bevorzugt, besonders bevorzugt usw. gekennzeichnet sind, wobei ein erstes als "bevorzugt" bezeichnetes Merkmal mit einem weiteren zweiten als z. B. "besonders bevorzugt" kombiniert werden kann, wenn sich inhaltlich oder technisch nicht ausdrücklich ein anderes ergibt.

Für den Fall, dass der Festigkeitsträger weniger als 100 Gew.-% recyceltes PET, also beispielsweise und insbesondere 10 bis < 100 Gew.-% recyceltes PET, umfasst, ist der restliche Anteil originäres PET *(engl.* Virgin PET), welches keinen Recyclingprozess durchlaufen hat und aus erdölbasierten (petrochemischen) oder nachwachsenden Rohstoffen stammt.

Mit einem Gehalt von 10 bis 100 Gew.-% an recyceltem PET in dem ersten Garn sind der Preis und die $CO_2$-Belastung bei der Herstellung der erfindungsgemäßen gummierten Festigkeitsträger und Fahrzeugreifen individuell einstellbar.

Die der Erfindung zugrunde liegende Aufgabe wird mit einem höheren Anteil an recyceltem PET besonders gut gelöst, aber auch ein Anteil an recyceltem PET von beispielsweise 10 Gew.-% trägt zur Ressourcenschonung und einer geringeren $CO_2$-Belastung bei.

Gemäß vorteilhafter Ausführungsformen umfasst das erste Garn aus HMLS-PET 20 bis 100 Gew.-% recyceltes PET.

Gemäß vorteilhafter Ausführungsformen umfasst das erste Garn aus HMLS-PET 30 bis 100 Gew.-% recyceltes PET.

Gemäß vorteilhafter Ausführungsformen umfasst das erste Garn aus HMLS-PET 40 bis 100 Gew.-% recyceltes PET.

Gemäß vorteilhafter Ausführungsformen umfasst das erste Garn aus HMLS-PET 50 bis 100 Gew.-% recyceltes PET.

Gemäß vorteilhafter Ausführungsformen umfasst das erste Garn aus HMLS-PET 60 bis 100 Gew.-% recyceltes PET.

Gemäß vorteilhafter Ausführungsformen umfasst das erste Garn aus HMLS-PET 70 bis 100 Gew.-% recyceltes PET.

Gemäß vorteilhafter Ausführungsformen umfasst das erste Garn aus HMLS-PET 80 bis 100 Gew.-% recyceltes PET.

Gemäß vorteilhafter Ausführungsformen umfasst das erste Garn aus HMLS-PET 90 bis 100 Gew.-% recyceltes PET.

Gemäß vorteilhafter Ausführungsformen umfasst das erste Garn aus HMLS-PET 100 Gew.-% recyceltes PET.

Insbesondere bevorzugt umfasst das Garn aus HMLS-PET 30 bis 100 Gew.-%, besonders bevorzugt 50 bis 100 Gew.-%, recyceltes PET.

Recyceltes PET unterscheidet sich von originärem (virgin) PET durch Zusätze, wie insbesondere durch den Gehalt an Isophthalsäure (IPA). Diese Zusätze, insbesondere durch IPA, sind beispielsweise und insbesondere in PET-Flaschen enthalten.

Während originäres PET einen Isophthalsäure-Gehalt von 0 Gew.-% aufweist, kann der Gehalt an IPA in recyceltem PET dabei bis zu 5 Gew.-% betragen.

Insbesondere beträgt er bei dem im Rahmen der vorliegenden Erfindung verwendeten recyceltem PET beispielsweise und insbesondere 1,2 bis 2,2 Gew.-%.

Die Gewichtsangaben in Prozent (Gew.-%) beziehen sich dabei auf das PET und damit im erfindungsgemäßen Festigkeitsträger auf das ungummierte und unvorbehandelte, d. h. insbesondere ungedippte, Garn.

Bei einem Anteil von 10 Gew.-% recyceltem PET und 90 Gew.-% originärem, erdölbasierten PET beträgt der Isophthalsäure-Gehalt somit 0,12 bis 0,5 Gew.-%, bevorzugt 0,12 bis 0,22 Gew.-%.

Damit weist das erste Garn aus HMLS-PET bevorzugt einen Isophthalsäure (IPA) - Gehalt von 0,12 bis 5 Gew.-%, beispielsweise und bevorzugt 0,12 bis 2,2 Gew.-% auf.

Unter einem "HMLS-Garn" ist dabei ein Garn zu verstehen, welches einen hohen Modul und einen niedrigen Schrumpf aufweist.

Dabei weist das erste Garn aus HMLS-PET insbesondere und bevorzugt einen Heißschrumpf von kleiner als 8 %, besonders bevorzugt 4 bis 8 %, und eine Dehnung bei 45 N von weniger als 0,0056 %/Den (Prozent pro Denier, wobei 1%/Den = 9%/10dTex bedeutet), besonders bevorzugt 0,002 bis 0,0056 %/Den, bei Filamentfeinheiten von weniger als 5 Den (wobei 1 Den = 10/9 dTex bedeutet), besonders bevorzugt 3 bis 5 Den, auf.

Diese Angaben sind besonders dazu geeignet das erste Garn aus HMLS-PET als HMLS-Garn zu charakterisieren.

Das erste Garn des erfindungsgemäßen Festigkeitsträgers weist bevorzugt eine Bruchfestigkeit von 7,0 bis 9,0 g/Den (Gramm pro Denier, wobei 1g/Den = 9g/10dTex bedeutet) auf.

Das erste Garn des erfindungsgemäßen Festigkeitsträgers weist bevorzugt eine Bruchdehnung von 10,2 bis 15,5 % auf.

Bei dem ersten Garn handelt es sich insbesondere und bevorzugt um ein endloses Multifilamentgarn und somit bevorzugt nicht um ein Monofilamentgarn und bevorzugt nicht um ein Stapelfasergarn.

Das erste Garn des erfindungsgemäßen Festigkeitsträgers umfasst bevorzugt Filamente mit Filamentfeinheiten von weniger als 5 Den, d. h. ein jedes Filament des Garns ist bevorzugt feiner als 5 Den. Besonders bevorzugt weist das erste Garn Filamentfeinheiten von 3 bis 5 Den auf.

Bevorzugt weist das erste Garn eine Dehnung bei einer Kraft von 45 N weniger als 0,0056 %/Den auf.

Die Bruchfestigkeit, die Dehnung bei 45 N und die Bruchdehnung werden im Rahmen der vorliegenden Erfindung mittels eines Instron-Zugprüfgerätes *(engl.* "Instron tensile tester") gemäß ASTM D885 bestimmt: Gerät Instron 5564, Klemme *(engl.* "clamp"): C-clamp, 2714-004 mit pneumatischer Aktivierung *(engl.* "pneumatic activation"), Ladekapazität 1 kN (ein kiloNewton), Testbedingungen: Messlänge *(engl.* "gauge length") 250 mm, Querhauptgeschwindigkeit *(engl.* "cross head speed") 300 mm/min, Vorspannung 0,05 gf/Den (Gram-force pro Denier), Luftdruck 0,4 bis 0,6 MPa, Konditionierung der Proben vor dem Test: 24 Stunden bei 24 $\pm$ (plus minus) 2 °C, 55 $\pm$ 5 % Luftfeuchtigkeit.

Das erste Garn des erfindungsgemäßen Festigkeitsträgers weist bevorzugt einen Heißschrumpf bei 177 °C von 3,2 bis 5,2 % auf.

Der Heißschrumpf von Garnen wird im Rahmen der vorliegenden Erfindung mittels der Heißluftschrumpf-Methode gemäß ASTM D885 bestimmt. Die Testbedingungen lauten: Temperatur 177°C, Last 0,05g/Den, Dauer 10 min.

Bevorzugt weist das erste Garn aus HMLS-PET einen Kristallisationsgrad von 45 bis 53,5 % auf.

Der Kristallisationsgrad wird gemäß ASTM D1505 folgendermaßen bestimmt: Über eine Dichtegradientensäule *(engl.* "density gradient column") wird zunächst die Garndichte ermittelt. Anschließend wird der Kristallisationsgrad durch Interpolation anhand der nachfolgend angegebenen Literaturwerte der Dichte von 100%ig amorphem und 100%ig kristallinem PET berechnet. Die Dichte von 100%ig amorphem PET beträgt 1,333 g/cm$^3$, während die von 100%ig kristallinem PET 1,455 g/cm$^3$ beträgt.

Mit einem derartigen Kristallisationsgrad ist das Garn und damit der erfindungsgemäße Festigkeitsträger herstellbar und weist gleichzeitig die für die hohen Anforderungen, insbesondere bei der Verwendung in der Karkasslage von Fahrzeugreifen, notwendigen Eigenschaften hinsichtlich Dehnungs- und Schrumpfverhalten auf.

Bevorzugt weist das erste Garn aus HMLS-PET eine Feinheit von 300 bis 4000 Denier (Den), bevorzugt 300 bis 3100 Den, besonders bevorzugt 300 bis 2000 Den, ganz besonders bevorzugt 900 bis 2000 Den, auf.

Gemäß einer ersten Ausführungsform wird das erste Garn verdreht und wie unten beschrieben weiterverarbeitet. In dieser Ausführungsform umfasst der erfindungsgemäße Festigkeitsträger ein in sich verdrehtes gummiertes Garn.

Gemäß der Erfindung sind Garne zu einem Cord verdreht. Hierbei ist in jedem Fall ein erstes Garn wie erfindungsgemäß beschrieben ein HMLS-PET Garn umfassend, bevorzugt 10 bis 100 Gew.-%, recyceltes PET.

Das wenigstens eine weitere (zweite) Garn ist gemäß einer besonders bevorzugten Ausführungsform ebenfalls ein HMLS-PET Garn umfassend,

bevorzugt 10 bis 100 Gew.-%, recyceltes PET, sodass gemäß dieser Ausführungsform wenigstens zwei der beschriebenen HMLS-PET Garne miteinander zu einem Cord verdreht sind.

Gemäß der Erfindung liegt das erste Garn in einem x2Cord verdreht vor, wobei der Cord einen Twistfaktor von 150 bis 250, bevorzugt 170 bis 230, und eine Bruchkraft von mindestens 6,3 g/Den, bevorzugt 6,3 bis 10 g/Den, und eine Dehnung bei 45 N von weniger als 0,0056 %/Den, bevorzugt 0,0005 bis 0,0040 %/Den, und einen Heißschrumpf von weniger als 3 %, bevorzugt 1 bis 3 %, besonders bevorzugt 1,5 bis 2,5 %, aufweist. Der Ausdruck "x2Cord" bedeutet, dass zwei Garne miteinander verdreht wurden.

Gemäß der beschriebenen Ausführungsform wird ein erstes Garn - wie erfindungsgemäß beschrieben ein HMLS-PET Garn umfassend recyceltes PET - mit bevorzugt einem zweiten weiteren HMLS-PET Garn umfassend recyceltes PET zu einem Cord verdreht.

Der Heißschrumpf von Corden wird im Rahmen der vorliegenden Erfindung mittels der Heißluftschrumpf-Methode gemäß ASTM D885 bei 180 °C bestimmt. Die Testbedingungen lauten: Temperatur 180°C, Last 0,05g/Den, Dauer 10 min.

Gemäß weiterer bevorzugter Ausführungsformen ist es aber auch denkbar, dass das wenigstens eine weitere Garn ein anderes Garn ist und somit der erfindungsgemäße Festigkeitsträger ein Hybridcord umfassend ein HMLS-PET Garn umfassend, bevorzugt 10 bis 100 Gew.-%, recyceltes PET und wenigstens ein weiteres Garn ist. Bevorzugt ist (besteht) dabei das wenigstens eine weitere Garn aus einem nichtmetallischen Material. Das nichtmetallische Material ist bevorzugt ausgewählt aus der Gruppe enthaltend Polyamid- (PA) und/oder Aramid- und/oder Polyetherketon- (PEK-) und/oder Polyketon-(POK-) und/oder Polyethylennaphthalat- (PEN-) und/oder Rayon- und/oder Viskose- und/oder Naturfasern und/oder Glasfasern.

Die beschriebenen Garne und/oder die beschriebenen Corde sind gemäß bevorzugter Ausführungsformen zu einer Textillage verwebt, bevor diese durch Haftungsaktivierung und Gummieren mit einer Gummierungsmischung weiterverarbeitet wird.

Ein weiterer Gegenstand der vorliegenden Erfindung ist eine Festigkeitsträgerlage aus einer Vielzahl an erfindungsgemäßen gummierten Festigkeitsträgern.

Ein weiterer Gegenstand der vorliegenden Erfindung ist ein Fahrzeugreifen, der wenigstens einen erfindungsgemäßen gummierten Festigkeitsträger aufweist.

Gemäß vorteilhafter Ausführungsformen der Erfindung weist der Fahrzeugreifen eine Vielzahl an erfindungsgemäßen gummierten Festigkeitsträgern in einer Festigkeitsträgerlage auf.

Bevorzugt ist die Festigkeitsträgerlage die Karkasslage und/oder eine Gürtelbandage und/oder eine Gürtellage und/oder ein Wulstverstärker, besonders bevorzugt wenigstens die Karkasslage.

Der erfindungsgemäße Fahrzeugreifen kann den erfindungsgemäßen Festigkeitsträger somit auch in einem oder mehreren Bauteilen, dabei bevorzugt wenigstens in der Karkasslage aufweisen.

Gemäß einer vorteilhaften Ausführungsform der Erfindung ist die Festigkeitsträgerlage zumindest die Karkasslage, wobei die Karkasslage im Rahmen eines Lagenumschlages einmal (Ein-Lagen-Konstruktion) oder zweimal (Zwei-Lagen-Konstruktion) um den Wulst geführt ist, wobei das Ende der Lage bzw. Lagen zwischen Kern und Gürtelkante liegt. Hierdurch kann der Fahrzeugreifen seine erforderliche Tragkraft erfüllen (unter Berücksichtigung des jeweiligen Lastindexes).

Gemäß einer vorteilhaften Weiterbildung dieser Ausführungsform ist dabei zusätzlich zu der einen oder den beiden Karkasslagen, die um den Wulst geführt sind, eine weitere Festigkeitsträgerlage umfassend erfindungsgemäße Festigkeitsträger in der Seitenwand bis an oder unter den Wulst angeordnet.

Hierdurch ist der Fahrzeugreifen weiter hinsichtlich seiner Tragkraft verbessert.

Im Folgenden wird ein besonders bevorzugtes Verfahren beschrieben, mit dem das erste Garn des gummierten Festigkeitsträgers erhalten werden kann. Das Garn wird wie beschrieben als ein endloses Multifilamentgarn hergestellt. Bei der Durchführung der näher beschriebenen Verfahrensschritte werden dem Fachmann bekannte Vorrichtungen verwendet, sofern nicht anders angegeben.

a) Bereitstellung von PET-Chips, welche 100 Gew.-% recyceltes PET aus PET-Flaschen oder anderen PET-Erzeugnissen umfassen und optional Bereitstellung von Chips aus originärem (*engl.* "virgin") PET;

b) Vorkristallisation (*engl.* "pre-crystallization"), Kristallisation und Festphasen-Polymerisation (*engl.* solid-state polymerization SSP) der PET-Chips aus Schritt a), wodurch hochviskose PET-Chips mit einer intrinsischen Viskosität von 0,85 bis 1,15 dl/g (Deziliter pro Gramm) erhalten werden;

c) Trocknen, optional Mischen der Chips aus recyceltem PET mit Chips aus originärem PET, womit PET-Chips erhalten werden, die zu 10 bis 100 Gew.-% Chips aus recyceltem PET umfassen,
Schmelzen und Extrudieren der PET-Chips für das Garnspinnen, anschließendes Garnspinnen mittels einer Spinndüse umfassend eine Nachheizung mit einer Pufferzone, und schrittweises Abkühlen des unverstreckten Garns, wobei der Wassergehalt der Chips nach dem Trocknen weniger als 30 ppm beträgt, die Temperatur der Nachheizung unterhalb der Spinndüse 280 bis 350 °C beträgt und die Länge der Pufferzone unter der Nachheizung während des schrittweise Abkühlens 20 bis 100 mm beträgt;

d) Ölen, Ziehen, Wärmeaushärten und Wickeln nach dem schrittweisen Abkühlen in Schritt c), wodurch ein HMLS-PET-Garn erhalten wird.

Dass recyceltes PET in Form von Chips bereitgestellt werden kann, ist dem Fachmann bekannt. Die Chips können auch als "Granulat" bezeichnet werden.

"PET-Chips, welche 100 Gew.-% recyceltes PET aus PET-Flaschen oder anderen PET-Erzeugnissen umfassen" wird vorliegend auch als "Chips aus recyceltem PET" bezeichnet.

Die intrinsische Viskosität wird im Rahmen der vorliegenden Erfindung mittels eines Ubbelohde-Kapillar-Viskosimeters (*engl.* "Ubbelohde Capillary Viscometer") gemäß ASTM D4603 bestimmt.

Für den Fall, dass das Garn weniger als 100 Gew.-% recyceltes PET, also insbesondere 10 bis < 100 Gew.-% recyceltes PET, umfasst, ist der restliche Anteil originäres PET (*engl.* Virgin PET), welches keinen Recyclingprozess durchlaufen hat und aus erdölbasierten (petrochemischen) oder nachwachsenden Rohstoffen stammt.

In diesem Fall werden in einem zusätzlichen Verfahrensschritt - oben als "optional Mischen" bezeichnet - Chips aus recyceltem PET und Chips aus originärem PET vor dem Spinnprozess miteinander vermischt. Bevorzugt erfolgt dieses Vermischen in einem Einschnecken-Fördersystem nach dem Schritt des Trocknens.

Für den Fall, dass 100 Gew.-% recyceltes PET verwendet werden, ist der zusätzliche Schritt des Mischens nicht notwendig und die Chips werden direkt getrocknet und extrudiert.

Durch die in recyceltem PET vorhandenen Zusätze, beispielsweise alternativer Monomere zu *p*-Terephthalsäure, wie beispielsweise IPA, ist die Kristallisationsfähigkeit des PET während des Spinnprozesses geschwächt. Hierdurch sind das Spinnen und Ziehen zu einem Garn erschwert, und dessen Eigenschaften sind gegenüber einem Garn aus originärem PET verschlechtert.

Durch die Vorkristallisation (*engl.* "pre-crystallization"), Kristallisation und Festphasen-Polymerisation (*engl.*

solid-state polymerization SSP) in Schritt b) wird eine weitere Polymerisation und damit eine Reduktion des Anteils an kürzeren Polymermolekülen erzielt, wodurch ein molekulares Kettenwachstum erzielt wird. Dies resultiert in einer erhöhten intrinsischen Viskosität. Hierdurch wird die Ziehbarkeit des Materials verbessert, wobei auch die Zugsteifigkeit und der Modul (Steifigkeit) des Garns verbessert werden. Durch Kombination der Vorkristallisation und Kristallisation mit der Temperatur der Nachheizung unterhalb der Spinndüse von 280 bis 350 °C und der Länge der Pufferzone unter der Nachheizung während des schrittweise Abkühlens von 20 bis 100 mm in Schritt c) kann die Kristallisationsrate derart angepasst werden, dass eine hohe SpinnGeschwindigkeit und eine hohe Zugrate beim Spinnprozess gewählt werden können. Ferner wird die Häufigkeit von Filament- und Garnbruch reduziert, wodurch ein Garn mit einer hohen Zugsteifigkeit und einem hohen Modul erhalten werden kann.

Festphasen-Polymerisation (*engl.* solid-state polymerization SSP) ist ein Prozess, bei dem die rohen PET-Chips in einem Reaktor platziert und erwärmt werden, um zu polymerisieren. Hierbei werden die molekulare Kettenlänge und die intrinsische Viskosität erhöht. Die intrinsische Viskosität von recycelten PET-Chips beträgt 0,55 bis 0,75 dl/g. Der Begriff Festphasen-Polymerisation wird im deutschen auch als Festphasen-Kondensation bezeichnet, da durch den Entzug von Wasser eine Kondensation stattfindet.

Besonders bevorzugt werden diese noch relativ niedrigviskosen rohen Chips folgendermaßen behandelt: Dabei werden die rohen PET-Chips bevorzugt für 0,5 bis 1,5 Stunden bei einer Temperatur von 150 bis 180 °C vorkristallisiert und anschließend für 4 bis 6 Stunden bei einer Temperatur von 200 bis 230 °C kristallisiert und schließlich für 30 bis 35 Stunden in einem SSP-Reaktor bei einer Wandtemperatur von 200 bis 220 °C reagieren gelassen.

Das gesamte System aus Vorrichtungen wird in einer Stickstoffatmosphäre betrieben, wobei der Sauerstoffgehalt des Stickstoffs bei 30 bis 70 ppm gehalten wird und der Taupunkt bevorzugt niedriger als - 70 °C (niedriger als minus 70 °C) ist.

Die intrinsische Viskosität der rohen PET-Chips wird dabei auf 0,85 bis 1,15 dl/g erhöht, wodurch hochviskose Chips erhalten werden.

Bevorzugt wird in Schritt c) unter Stickstoff getrocknet, wobei die Trocknungstemperatur bevorzugt 120 bis 160 °C beträgt und die Trocknungsdauer bevorzugt mehr als 8 Stunden beträgt. Hierdurch wird der Wassergehalt der hochviskosen Chips auf weniger als 30 ppm reduziert.

Bevorzugt erfolgt das Schmelzen und Extrudieren der hochviskosen PET-Chips in Schritt c) als eine Schmelzextrusion in einem Schneckenextruder, wobei die Temperatur in der Fütterzone des Schneckenextruders 300 bis 330 °C, die Temperatur in der Kompressionszone 290 bis 320 °C und die Temperatur in der Meteringzone (Austragszone) 280 bis 310 °C betragen und der Druck am Extruderkopf 14 bis 18 MPa (Megapascal) beträgt. Hieraus wird eine Schmelze erhalten.

Durch die Schmelzextrusion können ferner die Schmelzviskosität und die Fluidität der hochviskosen Chips verbessert sowie die negativen Auswirkungen durch den Gehalt an IPA weiter verringert werden und somit die Ziehbarkeit weiter verbessert werden.

Im Fall, dass hochviskose Chips aus recyceltem PET zuvor mit Chips aus originärem PET vermischt wurden, wird durch den Schritt der Extrusion die Homogenität des Gemisches aus recyceltem und originärem PET weiter verbessert.

Bevorzugt erfolgt das Spinnen (in Schritt c) mittels eines Spinnstrahls, wobei das Länge-Durchmesser-Verhältnis (L/D) der Spinndüsenöffnung gemäß vorteilhafter Ausführungsformen 1,2 bis 3,0 beträgt.

Die Spinndüse umfasst gemäß vorteilhafter Ausführungsformen 180 bis 480 Öffnungen und es wird ein Garn mit 1000 bis 1500 Denier erhalten.

Gemäß weiterer vorteilhafter Ausführungsformen kann ein Garn mit 300 bis 4000 Denier (Den), bevorzugt 300 bis 3100 Den, besonders bevorzugt 300 bis 2000 Den, ganz besonders bevorzugt 900 bis 2000 Den, erhalten werden, beispielsweise und insbesondere 500 Denier, 2000 Denier oder 4000 Denier. Für den Fall, dass eine Feinheit von mehr als 1500 Denier gewählt wird, kann die Anzahl an Spinndüsenöffnungen mehr als 480 betragen.

Bevorzugt wird ein Garn mit Filamenten mit Filamentfeinheiten von weniger als 5 Denier (Den) erhalten. Besonders bevorzugt wird ein Garn mit Filamentfeinheiten von 3 bis 5 Den erhalten.

Das schrittweise Abkühlen in Schritt c) hat den Zweck, dass die Schmelze des ungezogenen Garns verfestigt wird.

Bevorzugt umfasst das schrittweise Abkühlen in Schritt c) ein zirkulares Abschrecksystem im Anschluss an die Pufferzone, wobei kühlende Luft von außen in den inneren Ring geblasen wird, der Blasdruck dabei 15 bis 50 Pa beträgt und die Blastemperatur 22 bis 65 °C beträgt.

Hierdurch wird eine Adhäsion des ungezogenen Garns vermieden, was den nachfolgenden Ziehprozess in Schritt d) vereinfacht bzw. nicht erschwert. Durch die bevorzugten Parameter Blasdruck- und Temperatur der eingeblasenen Luft wird ein zu rasches und zu langsames Abkühlen vermieden, was wiederum eine Adhäsion des ungezogenen Garns und eine Verschlechterung der physikalischen Eigenschaften verhindert.

Für den Fall, dass das ungezogene Garn zu schnell abgekühlt wird, ist insbesondere das Ziehen beim Spinnen erschwert.

Für den Fall, dass das ungezogene Garn zu langsam abgekühlt wird, ergibt sich insbesondere das Risiko der erhöhten Adhäsion und der Verschlechterung der physikalischen Eigenschaften.

Aus den genannten Gründen ist es besonders vorteilhaft, wenn das ungezogene Garn nachgeheizt wird, schrittweise mittels eines zirkularen Abschrecksystems im Anschluss an die Pufferzone abgekühlt wird und mit Kühlluft nach dem Schmelzspinnen gekühlt wird.

Das Ölen in Schritt d) hat den Vorteil, dass die Kohäsion des ungezogenen Garns erhöht wird und Reibungskräfte sowie statische elektrische Aufladungen verringert werden. Dies erleichtert ebenfalls den nachfolgenden Ziehprozess und reduziert die Häufigkeit von Filament- und Garnbrüchen. Ferner ist dies auch für die nachfolgenden Bearbeitungsschritte zum gummierten Festigkeitsträger bzw. zur Gewebelage, insbesondere nämlich für das Verdrehen und Weben, vorteilhaft, da das Garn durch das Ölen besser gleitet.

Bevorzugt wird das Öl in einer Emulsion eingesetzt und die Ölaufnahmerate beträgt bevorzugt 0,3 bis 0,9 Gew.-% bezogen auf das Garn.

Bevorzugt erfolgt das Ziehen in Schritt d) mittels einer Galettenwalzen-Konstruktion, wobei ein erstes Galettenwalzen-Paar (GW1) mit einer Geschwindigkeit von 2700 bis 3200 m/min bei einer Temperatur von 60 bis 80 °C, ein zweites Galettenwalzen-Paar (GW2) mit einer Geschwindigkeit von 3800 bis 5000 m/min bei einer Temperatur von 70 bis 90 °C und ein drittes Galettenwalzen-Paar (GW3) mit einer Geschwindigkeit von 5800 bis 6200 m/min bei einer Temperatur von 210 bis 260 °C betrieben werden und die Zugrate bevorzugt 1,81 bis 2,30 % beträgt.

Hierdurch können optimale Eigenschaften des hergestellten Garns erzielt werden, wie eine optimierte Bruchfestigkeit und Bruchdehnung, sowie ein optimierter Heißschrumpf und Modul.

Bevorzugt erfolgt dabei das im Anschluss an das Ziehen stattfindende Wärmeaushärten mittels eines vierten Galettenwalzen-Paares (GW4) mit einer Geschwindigkeit von 5800 bis 6200 m/min bei einer Temperatur von 210 bis 260 °C, eines daran anschließenden fünften Galettenwalzen-Paares (GW5) mit einer Geschwindigkeit von 5600 bis 6200 m/min bei einer Temperatur von 210 bis 260 °C und eines daran anschließenden sechsten Galettenwalzen-Paares (GW6) mit einer Geschwindigkeit von 5450 bis 6000 m/min bei einer Temperatur von 100 bis 150 °C, wobei die Entspannungsrate 2,5 bis 6,0 % beträgt.

Hierdurch können eine optimale Kristallisation, eine stabile Mikrostruktur, eine optimale Bruchfestigkeit und ein optimaler Modul und eine Reduktion des Heißschrumpfes erzielt werden. Das Garn ist somit optimal für den anschließenden Wickel-Prozess und das Wärmeaushärten vorbereitet.

Bevorzugt erfolgt das Wickeln in Schritt d) bei einer Wickelgeschwindigkeit von 5450 bis 5950 m/min.

Mit den beschriebenen Verfahrensschritten a) bis d) wird ein Garn erhalten, welches eine Bruchfestigkeit von 7,5 bis 9,0 g/d, eine Bruchdehnung von 10,2 bis 15,5 %, einen Heißschrumpf von 3,2 bis 5,2 %, einen Kristallisationsgrad von 45 bis 53,5 % und einen IPA-Gehalt von 0,12 bis 5 Gew.-%, insbesondere 0,12 bis 2,2 Gew.-%, aufweist.

Ferner kann das Garn mit einer Feinheit von 300 bis 4000 Denier erhalten werden.

Das erhaltene HMLS-PET Garn umfassend 10 bis 100 Gew.-% recyceltes PET wird insbesondere und bevorzugt durch wenigstens folgende Verfahrensschritte weiterverarbeitet, um den erfindungsgemäßen gummierten Festigkeitsträger zu erhalten:

    e) Verdrehen (engl. "twisting")
    f) Optional Weben;
    g) Haftungsausrüsten mit einem Dip
    h) Gummierung mit einer Gummierungsmischung

Gemäß vorteilhafter Ausführungsformen der Erfindung wird das Garn zunächst selbst verdreht und anschließend mit einem weiteren ebenfalls verdrehten Garn zu einem Cord verdreht.

Die eingesetzten Garne des Cordes können dabei jeweils aus in S- oder Z-Richtung verdrehten Filamenten aufgebaut sein. Somit kann z.B. das HMLS-PET Garn umfassend recyceltes PET S- oder Z-verdreht sein.

Die verdrehten Garne werden dann in S- oder Z-Richtung zu einem Verstärkungscord endverdreht. Vorteilhafterweise weisen die Garne eines Verstärkungscordes alle die gleiche Drehrichtung auf, d.h. sie sind entweder in S- oder Z-Richtung verdreht. In dieser vorteilhaften Variante weist der Verstärkungscord die den Garnen entgegengesetzte Drehrichtung auf. So kann z.B. ein S-verdrehtes HMLS-PET Garn umfassend recyceltes PET mit einem weiteren S-verdrehten HMLS-PET Garn - umfassend recyceltes PET - in Z-Richtung zu einem Verstärkungscord endverdreht sein.

Alternativ ist es auch denkbar, dass ein entsprechender Hybridkord erhalten wird, wobei z. B. ein S-verdrehtes HMLS-PET Garn umfassend recyceltes PET mit einem weiteren Garn endverdreht wird. Beispielhafte und bevorzugte Materialien für das weitere Garn sind oben ausgeführt.

Gemäß vorteilhafter Ausführungsformen der Erfindung werden zwei Garne in einer Direktkabliermaschine zu einem Cord aus zwei Garnen (x2 Cord) verdreht.

Die Zahl der Verdrehungen der Garne und Corde (tpm, "turns per meter") beträgt bevorzugt jeweils 100 bis 500 tpm. Bevorzugt weisen Corde umfassend das erste Garn einen Twistfaktor TF von 150 bis 250 auf. Der Twistfaktor TF wird folgendermaßen gemäß Formel I) berechnet:

$$TF = N*(K/9000)^{0,5}$$

wobei N die Zahl der Verdrehungen (in tpm) und K die Kordfeinheit ist und "^0,5" die Wurzel darstellen soll (aus dem Klammerausdruck), also TF = Zahl der Verdrehungen (in tpm) * (mal) [Kordfeinheit (in Denier) / 9000]^0,5 (hoch 0,5)

Beim Weben (Schritt f) ist bevorzugt folgendes zu beachten:
Bei der Anordnung des Garns auf dem Spulengatter wird die Spannung jeder Garnspule durch Wälzlager und Gummiriemen kontrolliert, um eine gleichbleibende Spannung zu gewährleisten. Während des Webprozesses wird das Garn durch das Webblatt geführt, das entsprechend den Spezifikationen angepasst wird, und auf einer Luftdüsenwebmaschine gewebt. Dann wird der Cord zu Rohgewebe mit einer voreingestellten Breite gewebt, wobei das Schussgarn insbesondere ein Garn mit einem elastischen Kern aus beispielsweise PET oder Nylon ist, der mit beispielsweise Baumwolle umwickelt ist.

Das in Schritt f) erhaltene Rohgewebe wird anschließend mittels eines Dips in Schritt g) weiterverarbeitet. Hierdurch erhält der Festigkeitsträger, insbesondere das Garn oder der Cord, ideale physikalische Eigenschaften und ein optimiertes Haftvermögen an die später aufgebrachte Gummierungsmischung.

Insbesondere kann der Dip einen Vor-Dip umfassen sowie ein im Stand der Technik bekannter RFL-Dip (Resorcin-Formaldehyd-Latex) sein oder eine umwelt- und gesundheitsfreundliche RFL-freie Alternative, wie beispielsweise in DE 102014211362 A1 oder WO 2019015792 A1 beschrieben.

Die Haftungsausrüstung mittels eines Dips gemäß Schritt g) kann damit insbesondere im Stand der Technik bekannte 1-Bad- oder 2-Bad-Verfahren (Vor-Dip und Dip) umfassen.

Während des Dipverfahrens werden nacheinander im Stand der Technik bekannte Vorrichtungen und Bedingungen, wie Tauchlösungswannen, Spannungszonen und Öfen verwendet. Dabei wird das Gewebe oder der Cord (je nachdem, ob das Weben gemäß Schritt f) erfolgt) um 0 bis 8 %, insbesondere 0 bis 3 % verstreckt.

Die anschließende Gummierung in Schritt h) erfolgt auf dem Fachmann bekannte Art und Weise mittels einer Gummierungsmischung und dem Fachmann bekannten Vorrichtungen. Hierbei wird gegebenenfalls vor dem Gummieren bei hohen Temperaturen, insbesondere von mehr als 100 °C, getrocknet.

Bei der Gummierungsmischung kann es sich um jegliche dem Fachmann bekannte, geeignete Gummierungsmischung zur Ummantelung von Festigkeitsträgern, insbesondere textilen Festigkeitsträgern, handeln.

Bevorzugt enthält die Gummierungsmischung wenigstens einen Dienkautschuk.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Gemäß vorteilhafter Ausführungsformen ist der Dienkautschuk ausgewählt aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR).

Die Gummierungsmischung enthält gemäß vorteilhafter Ausführungsformen zumindest einen Ruß als unpolaren Füllstoff.

Der Ruß wird bevorzugt in Mengen von 0,1 bis 100 phr, besonders bevorzugt in Mengen von 40 bis 100 phr, ganz besonders bevorzugt in Mengen von 40 bis 80 phr, in der Gummierungsmischung eingesetzt. Wiederum besonders bevorzugt ist es, wenn die Kautschukmischung 57 bis 67 phr zumindest eines Rußes enthält. Hiermit werden besonders gute Mischungseigenschaften im Hinblick auf die Reißeigenschaften erzielt.

Das beschriebene Verfahren umfassend wenigstens die Schritte a) bis h) ist ein weiterer Gegenstand der vorliegenden Erfindung. Der erfindungsgemäße Festigkeitsträger ist bevorzugt mit diesem Verfahren hergestellt. Ein weiterer Gegenstand der vorliegenden Erfindung ist damit der mittels des beschriebenen Verfahrens erhaltene Festigkeitsträger.

Im Folgenden soll die Erfindung anhand einiger Ausführungsbeispiele näher erläutert werden. Hierzu ist zunächst in Tabelle 1 eine Übersicht über Garne und ihre Herstellparameter gegeben, die beispielhaft im erfindungsgemäßen Festigkeitsträger verwendet werden.

Dabei gelten die obigen Ausführungen in Ergänzung zu den näher spezifizierten Parametern. Insbesondere wurde bei allen Beispielen E1 bis E6 das Verfahren gemäß den Schritten a) bis d) durchgeführt, inklusive der Festphasen-Polymerisation wie oben beschrieben. Dabei wurden die rohen PET-Chips für 0,5 bis 1,5 Stunden bei einer Temperatur von 150 bis 180 °C vorkristallisiert und anschließend für 4 bis 6 Stunden bei einer Temperatur von 200 bis 230 °C kristallisiert und schließlich für 30 bis 35 Stunden in einem SSP-Reaktor bei einer Wandtemperatur von 200 bis 220 °C reagieren gelassen.

Das gesamte System aus Vorrichtungen wurde in einer Stickstoffatmosphäre betrieben, wobei der Sauerstoffgehalt des Stickstoffs bei 30 bis 70 ppm gehalten wurde und der Taupunkt bevorzugt niedriger als - 70 °C (niedriger als minus 70 °C) betrug.

Tabelle 1

| | | E1 | E2 | E3 | E4 | E5 | E6 |
|---|---|---|---|---|---|---|---|
| Quelle der PET-Chips | | Recycel tes PET | Mischung von recyceltem PET und originärem PET | | | | |
| Anteil des recycelten PET im Roh-Chip (Gew.-%) | | 100 | 10 | 40 | 60 | 90 | 80 |
| IPA-Anteil (Gew.-%) | | 1,5 | 0,15 | 0,60 | 0,90 | 1,35 | 1,20 |
| Intrinsische Viskosität | | 0,55 | 0,70 | 0,68 | 0,72 | 0,75 | 0,75 |
| Verfahrensparameter | | | | | | | |
| Intrinsische Viskosität der hochviskosen Chips | | 0,85 | 1,05 | 1,00 | 1,05 | 1,15 | 1,12 |
| Troc knen | Temperatur (°C) | 140 | 130 | 120 | 160 | 150 | 150 |
| | Zeit (hour) | 8,5 | 8,0 | 9,0 | 9,5 | 8,5 | 8,5 |
| Misc hen | Mischverhältnis (%) | 100 | 10 | 40 | 60 | 90 | 80 |
| Extru sion | T Fütterzone (°C) | 315 | 330 | 310 | 320 | 300 | 300 |
| | T Kompressionszone (°C) | 305 | 320 | 300 | 310 | 290 | 290 |
| | T Meteringzone (°C) | 295 | 310 | 290 | 300 | 280 | 280 |
| | Temperatur der Schmelze (°C) | 285 | 300 | 280 | 290 | 270 | 270 |
| | Druck am Extruderkopf (MPa) | 16 | 18 | 15 | 17 | 14 | 14 |
| Spin nen | DEN (D) | 1500 | 1000 | 1300 | 1500 | 1500 | 1500 |
| | Anzahl der Öffnungen | 370 | 180 | 280 | 320 | 480 | 480 |
| | L/D | 2,1 | 3,0 | 1,7 | 2,5 | 1,2 | 1,2 |
| | Nachheiztemperatur (°C) | 315 | 350 | 305 | 330 | 280 | 320 |
| | Länge Pufferzone (mm) | 60 | 100 | 45 | 75 | 20 | 100 |
| | Blasdruck (MPa) | 35 | 50 | 38 | 26 | 15 | 30 |
| | Blastemperatur (°C) | 45 | 65 | 38 | 52 | 22 | 65 |
| Ölen | Aufnahmerate (Gew.-%) | 0,6 | 0,9 | 0,5 | 0,7 | 0,3 | 0,5 |
| Ziehe n | GW1 Geschw. (m/min) | 2950 | 2700 | 2900 | 2750 | 3200 | 3180 |
| | GW1 Temp. (°C) | 70 | 80 | 66 | 74 | 60 | 80 |
| | GW2 Geschw (m/min) | 4400 | 5000 | 4200 | 4600 | 3800 | 3850 |
| | GW2 Temp. (°C) | 80 | 90 | 76 | 84 | 70 | 90 |
| | GW3 Geschw (m/min) | 6000 | 6200 | 5950 | 6050 | 5800 | 5800 |
| | GR3 Temp. (°C) | 235 | 260 | 220 | 240 | 210 | 250 |
| | Zugrate | 2,03 | 2,30 | 1,97 | 2,20 | 1,81 | 1,82 |
| | GW4 Geschw. (m/min) | 6000 | 6200 | 5850 | 6050 | 5800 | 5800 |
| | GW4 Temp. (°C) | 235 | 260 | 220 | 240 | 210 | 250 |

(fortgesetzt)

| Verfahrensparameter | | | | | | | | |
|---|---|---|---|---|---|---|---|
| Wärmeaushärten | GW5 Geschw. (m/min) | 6000 | 6200 | 5850 | 6050 | 5800 | 5600 |
| | GW5 Temp. (°C) | 235 | 260 | 220 | 240 | 210 | 250 |
| | GW6 Geschw. (m/min) | 5800 | 6000 | 5850 | 5850 | 5600 | 5450 |
| | GW6 Temp. (°C) | 125 | 150 | 115 | 135 | 100 | 120 |
| | Entspannungsrate (%) | 3,3 | 4,0 | 2,5 | 3,3 | 3,5 | 6,0 |
| Wickeln | Wickel Geschw. (m/min) | 5800 | 5950 | 5800 | 5850 | 5600 | 5450 |

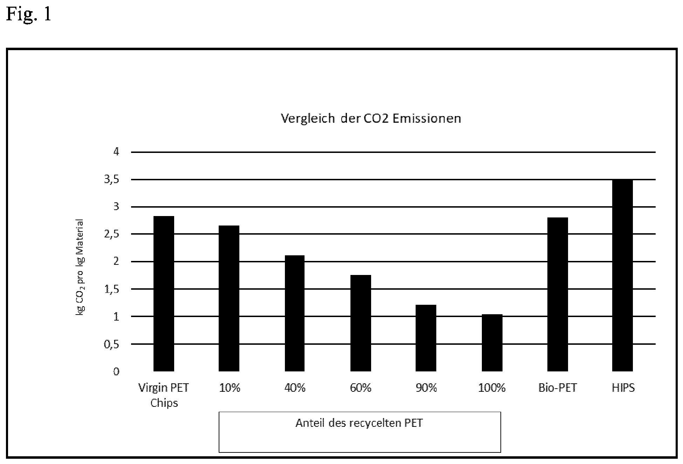

In Fig. 1 sind die Beispiele E1 bis E6 - angegeben über den Anteil an recyceltem PET - in einem Balkendiagramm aufgetragen, wobei die Höhe der Balken die $CO_2$-Emission (kg-$CO_2$/kg-Produkt) darstellt. Die Angaben beziehen sich auf die PET-Chip Herstellung exklusive der Beiträge zur Herstellung der Monomere wie Monoethylenglykol (MEG) und PTA (*engl.* "Purified Terephthalic Acid"). Die Folgeprozesse beginnend mit der Garnherstellung werden als unabhängig vom PET Rohstoff bezüglich der $CO_2$ Emissionen betrachtet.

Der Balken auf der linken Seite stellt die $CO_2$-Emission von originärem PET dar, während die beiden Balken auf der rechten Seite die $CO_2$-Emission von bio-basiertem PET (Das Monomer Ethylenglykol wurde aus Mais gewonnen, sodass ca. 30 Gew.-% der Rohmaterialien aus nachwachsenden Rohstoffen stammen) und HIPS ("high-impact polystyrene"; hochschlagzähes Polystyrol) darstellen.

Wie an Fig. 1 erkennbar, wird die niedrigste $CO_2$-Emission mit einem PET erzielt, welches zu 100 Gew.-% aus recyceltem PET hergestellt ist. Die CO2 Bilanz des Rezyklats beginnt erst nach dem Einsatz als beispielsweise PET Flasche

Bei den Balken "Origin PET" und "Bio PET" ist die $CO_2$-Emission aufgrund der Monomere aus unterschiedlichen Rohstoffen nicht berücksichtigt. Das heißt, diese Werte umfassen im Wesentlichen die Polykondensation zu PET-Chips.

Im Fall von 100 % recyceltem PET umfasst der Wert im Wesentlichen die Zerkleinerung und das Umschmelzen zu PET-Chips.

Die Werte dazwischen - also mit 10 bis 90 % recyceltem PET - sind anteilig aus den Werten für "Origin PET" und 100 % recyceltem PET berechnet.

Ferner wurden weitere Versuche durchgeführt, bei denen jeweils ebenfalls 100 Gew.-% recyceltes PET (wie E1) verwendet wurden, aber jeweils unterschiedliche Verfahrensschritte angepasst wurden.

Gemäß dem Vergleichsversuch V2 wurde wie bei E1 vorgegangen, mit dem Unterschied, dass der gesamte Prozess der Festphasen-Polymerisation weggelassen wurde.

Gemäß dem Vergleichsversuch V3 wurde wie bei E1 vorgegangen, mit dem Unterschied, dass die Festphasen-Polymerisation ohne die Schritte der Vor-Kristallisation und Kristallisation durchgeführt wurde.

Gemäß dem Vergleichsversuch V4 wurde wie bei E1 vorgegangen, mit dem Unterschied, dass das ungezogene Garn nach dem Spinnprozess direkt mittels Kühlluft abgekühlt wurde, ohne Nachheizung mit Pufferzone (vgl. Schritt c)).

Gemäß dem Vergleichsversuch V5 wurde wie bei E3 vorgegangen, mit dem Unterschied, dass das ungezogene Garn nach dem Spinnprozess direkt mittels Kühlluft abgekühlt wurde, ohne Nachheizung mit Pufferzone (vgl. Schritt c)).

In Tabelle 2 ist der Einfluss der unterschiedlichen Verfahrensführungen auf die physikalischen Eigenschaften des jeweiligen Garns dargestellt.

Die Eigenschaften wurden mittels der oben beschriebenen Methoden bestimmt.

Ferner wurde als weiteres Kriterium der Grad der Filamentbrüche im Garnherstellprozess hinzugezogen. Für jede Spule (9 kg, 62 km lang, 1300 Den) wurde festgelegt, dass die Zahl der Filamentbrüche kleiner als 10 sein musste, um als qualifiziert (Q) eingestuft zu werden. Andernfalls wurde die Probe als nicht ausreichend (NQ) bewertet.

**Tabelle 2**

| | E1 | E2 | E3 | E4 | E5 | E6 | V2 | V3 | V4 | V5 |
|---|---|---|---|---|---|---|---|---|---|---|
| Denier (Den) | 150 0 | 1000 | 1300 | 1500 | 1500 | 1500 | 1500 | 1500 | 1500 | 1500 |
| Anteil an rPET | 100 % | 10% | 40% | 60% | 90% | 80% | 100% | 100% | 100% | 100% |
| IPA-Anteil | 1,50 | 0,15 | 0,60 | 0,90 | 1,35 | 1,20 | 1,50 | 1,50 | 1,50 | 1,50 |
| Kristallinität (%) | 48,2 | 53,5 | 51,5 | 50,3 | 49,5 | 45,0 | 45,2 | 48,5 | 48,4 | 47,7 |
| Anzahl der Filamente | 370 | 180 | 280 | 320 | 480 | 480 | 370 | 370 | 370 | 370 |

(fortgesetzt)

|  | E1 | E2 | E3 | E4 | E5 | E6 | V2 | V3 | V4 | V5 |
|---|---|---|---|---|---|---|---|---|---|---|
| Filamentfeinheit (Den) | 4,1 | 5,6 | 4,6 | 4,7 | 3,1 | 3,1 | 4,1 | 4,1 | 4,1 | 4,1 |
| Bruchfestigkeit (g/Den) | 7,8 | 9,0 | 8,2 | 8,0 | 7,9 | 7,5 | 5,2 | 7,6 | 7,5 | 7,2 |
| Bruchdehnung (%) | 11,9 | 12,1 | 10,2 | 10,8 | 11,5 | 15,5 | 10,2 | 11,5 | 11,0 | 11,2 |
| Dehnung bei 45 N | 3,5 | 5,6 | 4,7 | 3,5 | 3,6 | 3,6 | 5,3 | 3,7 | 4,0 | 4,2 |
| Dehnung bei 45 N (%/Den) | 0,00 23 | 0,0056 | 0,0036 | 0,0023 | 0,002 4 | 0,002 4 | 0,0033 | 0,0025 | 0,0027 | 0,0028 |
| Heißschrumpf bei 177 °C (%) | 4,7 | 4,2 | 5,2 | 4,8 | 4,5 | 3,2 | 2,1 | 4,5 | 5,0 | 4,8 |
| Ausschussrate (%) | 3,3 | 3,5 | 3,2 | 3,2 | 3,6 | 2,8 | 30,5 | 9,7 | 18,2 | 22,4 |
| Grad der Filamentbrüche | Q | Q | Q | Q | Q | Q | NQ | NQ | NQ | NQ |

Die Daten in Tabelle 2 zeigen, dass Garne, die mit dem Verfahren gemäß den Schritten a) bis d) umfassend die Festphasen-Polymerisation, das Spinnen, den Abkühl- und den Ziehprozess hergestellt wurden, Eigenschaften, wie Bruchfestigkeit und Bruchdehnung, aufweisen, die mit traditionell hergestellten Garnen vergleichbar sind. Damit können mit den Garnen gemäß der Beispiele E1 bis E6 erfindungsgemäße gummierte Festigkeitsträger und Fahrzeugreifen aufweisend den gummierten Festigkeitsträger, insbesondere in einer Festigkeitsträgerlage, effizient und mit einer geringen Abfallquote (< 4 %) hergestellt werden, wobei aufgrund der qualitativ hochwertigen Eigenschaften gleichzeitig den entsprechenden Anforderungen bei der Verwendung Sorge getragen wird.

Verglichen mit V2 werden bei E1 durch die Festphasen-Polymerisation ein molekulares Kettenwachstum und eine Verringerung von in recyceltem PET vorhandenen Zusätze, beispielsweise alternativer Monomere zu *p*-Terephthalsäure, wie beispielsweise IPA, erzielt.

Verglichen mit V3 werden bei E1 durch die Vor-Kristallisation und die Kristallisation als Teil des Festphasen-Polymerisations-Prozesses eine verbesserte Qualität und Prozessierbarkeit der hochviskosen Chips erzielt und negative Effekte, wie eine Verfestigung ("cementation") und Agglomeration im SSP-Reaktor, vermieden. Wenn diese negativen Effekte auftreten, führt dies zu einem irregulären Auswurf des SSP-Reaktors und einer erhöhten Varianz in der intrinsischen Viskosität der hochviskosen Chips. Ferner führt dies zu weitergehenden negativen Folgen, wie einem heterogenen Schmelzpunkt, einem heterogenen Schmelzverhalten und einer heterogenen Kristallisationsrate des Garns. Hierdurch wird die Häufigkeit der Filament- und Garnbrüche erhöht und die Herstellbarkeit der Garne generell stark erschwert.

Sofern die Vor-Kristallisation und die Kristallisation als Teil des Festphasen-Polymerisations-Prozesses durchgeführt werden, können die Homogenität der Viskosität, des Schmelzpunktes und der Kristallisationsrate der hochviskosen Chips effektiv kontrolliert werden.

Wenn der SSP-Prozess nicht durchgeführt wird, erfüllt die Bruchfestigkeit der hergestellten Garne nicht die Anforderungen, die Häufigkeit der Filament- und Garnbrüche ist erhöht und die Produktionseffizienz verringert.

Anhand des Beispiels V4 zeigt sich, dass im Fall des Weglassens der Nachheizung und Pufferzone nach dem Spinnen, das ungezogene Garn zu schnell abkühlt und vorzeitig härtet und kristallisiert, was zu einer geringeren Produktionseffizienz und schlechteren physikalischen Eigenschaften führt.

Anhand des Beispiels V5 zeigt sich, dass im Fall des Weglassens der Vorkristallisation und der Kristallisation beim SSP-Prozess und des Weglassens der Nachheizung und Pufferzone nach dem Spinnen, eine schlechte Homogenität der hochviskosen Chips und eine schnelle Kristallisationsrate beim Spinnen und eine schlechtere Spinnbarkeit und ein geringerer Kristallisationsgrad des fertigen Garns erzielt werden.

Die Vor-Kristallisation und die Kristallisation sollten daher mit der Nachheizung und der Pufferzone wie oben beschrieben kombiniert werden, um die Kristallisationsrate zu verlangsamen und den Kristallisationsgrad zu erhöhen.

Aus den Garnen der oben aufgeführten Beispiele E1 bis E6 sowie V2 bis V5 wurden durch Verdrehen jeweils zweier Garne Corde hergestellt, diese verwoben und gedippt, womit ein gedipptes Gewebe erhalten wurden.

Beim Verdrehen wurden zwei Garne in einer Direktkabliermaschine zu einem Cord aus zwei Garnen (x1x2 Cord) verdreht.

Die Garne sind in S-Richtung verdreht worden, während der Cord in Z-Richtung verdreht ist.

Beim Weben wurde Folgendes beachtet:

Bei der Anordnung des Garns auf dem Spulengatter wurde die Spannung jeder Garnspule durch Wälzlager und Gummiriemen kontrolliert, um eine gleichbleibende Spannung zu gewährleisten. Während des Webprozesses wurde das Garn durch das Webblatt geführt, das entsprechend den Spezifikationen angepasst wurde, und auf einer Luftdüsenwebmaschine gewebt. Dann wurde der Cord zu Rohgewebe mit einer voreingestellten Breite gewebt, wobei der Schussfaden ein 22, 2 tex Nylon kerngesponnenes Garn (Kern aus Nylon Monofilament, mit Stapelfasern aus Baumwolle ummantelt, *engl.* "core spun yarn") war.

Das erhaltene Rohgewebe wurde anschließend mittels eines Dips weiterverarbeitet. Hierbei wurde ein 2-Bad-Tauchverfahren angewendet. In einem ersten Bad wurden eine EpoxyVerbindung (Handelsname Grilbond® G 1701, Fa. EMS-GRILTECH) und eine Isocyanatverbindung (Handelsname Grilbond® IL-6 50% F, Fa. EMS-GRILTECH) bereitgestellt und die Garne hierin gedippt und somit deren oberflächlichen Filamente aktiviert.

In einem zweiten Bad wurde ein Resorcin-Formaldehyd-Latex (vorkondensiertes Harz aus Resorcin und Formaldehyd in einer wässrigen Dispersion mit u.a. Formaldehyd und Latex vermischt) bereitgestellt und das mittels des ersten Bades aktivierte Gewebe darin gedippt. Während des Dipverfahrens wurden nacheinander im Stand der Technik bekannte Vorrichtungen und Bedingungen, wie Tauchlösungswannen, Spannungszonen und Öfen verwendet.

Ferner fand eine Heißverstreckung statt, wobei eine Nettoverstreckung von 0 bis 1 % eingestellt wurde.

Die erhaltenen Corde wurden auf ihre Eigenschaften untersucht, wobei die Ergebnisse in Tabelle 3 zusammengefasst sind.

Die Angabe 1500/2 ist als 1500 Den /2 zu verstehen und bedeutet, dass 2 Garne mit jeweils einer Feinheit von 1500 Den zu einem Cord verdreht wurden. Analoges gilt für die Angabe 1000/2.

Die Zahl der Verdrehungen pro meter, *engl.* "turns per meter" (tpm) in Tabelle 3 bezieht sich auf den jeweiligen Cord.

Die Restfestigkeit wurde mittels eines Goodrich-Ermüdungstests unter folgenden Bedingungen ermittelt: 1800 rpm ("revolutions per minute", Umdrehungen per Minute), Dauer 24 Stunden, 20% Kompression, 6.5% Zug, bei Raumtemperatur.

Tabelle 3

| | E1 | E2 | E3 | E4 | E5 | E6 | V2 | V3 | V4 | V5 |
|---|---|---|---|---|---|---|---|---|---|---|
| Cord-Konstruktion | 1500/2 | 1000/2 | 1300/2 | 1500/ 2 | 1500/ 2 | 1500/ 2 | 1000/ 2 | 1500/ 2 | 1500/ 2 | 1500/ 2 |
| Anteil an rPET | 100% | 10% | 40% | 60% | 90% | 80% | 100% | 100% | 100% | 100% |
| tpm | 320 | 430 | 370 | 320 | 320 | 320 | 430 | 320 | 320 | 320 |
| Bruchkraft (N) | 214,4 | 160,7 | 193,5 | 223,2 | 215,9 | 205,5 | 82,5 | 209,4 | 202,0 | 192,8 |
| Bruchdehnung (%) | 16,2 | 14,7 | 16,6 | 16,2 | 15,6 | 16,0 | 9,7 | 15,1 | 13,5 | 13,0 |
| Dehnung bei 45N (%) | 2,3 | 4,1 | 3,2 | 2,4 | 2,4 | 2,4 | 5,6 | 2,4 | 2,7 | 2,9 |
| Dehnung bei 45 N (%/Den) | 0,0008 | 0,0021 | 0,0012 | 0,000 8 | 0,000 8 | 0,000 8 | 0,002 8 | 0,000 8 | 0,000 9 | 0,001 0 |
| Heißschrumpf (%) (180°C, 2min, 0,05 g/Den) | 2,3 | 1,8 | 1,7 | 2,2 | 2,1 | 2,4 | 1,3 | 2,4 | 2,2 | 2,4 |
| Restfestigkeit (%) | 83,9 | 85,5 | 86,0 | 83,3 | 84,8 | 82,5 | 0 | 77,2 | 65,5 | 55,6 |

Wie an Tabelle 3 erkennbar, konnten mit den Beispielen E1 bis E6 Corde hergestellt werden, deren Eigenschaften den Anforderungen genügen, um in einem erfindungsgemäßen gummierten Festigkeitsträger, insbesondere für Fahrzeugreifen, verwendet zu werden. Die Vergleichsbeispiele V2 bis V5 hingegen zeigen schlechtere Eigenschaften und sind daher nicht so gut geeignet. Insbesondere der größere Schaden an den Filamenten beim Hochgeschwindigkeitsspinnen führt dazu, dass der Ermüdungswiderstand der hergestellten Corde stark negativ beeinträchtigt ist. Wie anhand des Beispiels V2 erkennbar, ist die Probe vor Beendigung des Ermüdungsversuches gebrochen.

Somit ist es, wie an den Beispielen E1 bis E6 gezeigt, gelungen, einen erfindungsgemäßen gummierten Festigkeitsträger für elastomere Erzeugnisse, insbesondere Fahrzeugreifen, bereitzustellen, der besonders ressourcen- und umweltschonend hergestellt wurde und gleichzeitig gute physikalische Eigenschaften aufweist, sodass er den Anforderungen, insbesondere im Fahrbetrieb von Fahrzeugreifen gerecht wird. Hierbei weist der erfindungsgemäße Fahrzeugreifen den gummierten Festigkeitsträger wenigstens in der Karkasslage auf, und zwar insbesondere eine Vielzahl der gummierten Festigkeitsträger in einer entsprechenden Festigkeitsträgerlage, die die Karkasslage bildet.

Eine beispielhafte Zusammensetzung einer Gummierungsmischung des erfindungsgemäßen gummierten Festigkeitsträgers ist in Tabelle 4 wiedergegeben.

Tabelle 4

| Bestandteile | Einheit | Menge |
|---|---|---|
| Polyisopren | phr | 50 |
| Polybutadien | phr | 20 |
| ESBR [a] | phr | 41,25 |
| Ruß N660 | phr | 65 |
| Weichmacheröl/Klebharz | phr | 20,5 |
| Alterungsschutzmittel | phr | 2 |
| Resorcinharz | phr | 1,63 |
| Hexamethoxymethylmelamin [b] | phr | 2 |
| Stearinsäure | phr | 1 |
| Zinkoxid | phr | 3 |
| Beschleuniger | phr | 1 |
| Schwefel mit 33 % Öl | phr | 3,8 |
| [a] ölverstreckt mit 27,3 % aromatenfreiem Öl<br>[b] 65 %ig auf anorganischem Träger | | |

**Patentansprüche**

1. Gummierter Festigkeitsträger für elastomere Erzeugnisse, insbesondere Fahrzeugreifen, wobei der Festigkeitsträger wenigstens ein erstes und ein zweites Garn aufweist, das erste Garn ein Garn aus HMLS-PET ist, welches recyceltes PET umfasst, **dadurch gekennzeichnet, dass** das erste Garn in einem x2Cord verdreht mit dem zweiten Garn vorliegt, wobei der Cord einen Twistfaktor von 150 bis 250 und eine Bruchkraft von mindestens 6,3 g/Den (entspricht 5,67 g/dTex) und eine Dehnung bei 45 N von weniger als 0,0056 %/Den (entspricht 0,00504 %/dTex) und einen Heißschrumpf von weniger als 3 % aufweist.

2. Gummierter Festigkeitsträger nach Anspruch 1, **dadurch gekennzeichnet, dass** das erste Garn aus HMLS-PET 10 bis 100 Gew.-%, bevorzugt 30 bis 100 Gew.-%, besonders bevorzugt 50 bis 100 Gew.-%, recyceltes PET umfasst.

3. Gummierter Festigkeitsträger nach einem der Ansprüche 1 oder 2, **dadurch gekennzeichnet, dass** das erste Garn aus HMLS-PET 0,12 bis 5 Gew.-%, insbesondere 0,12 bis 2,2 Gew.-%, an Isophthalsäure (IPA) aufweist.

4. Gummierter Festigkeitsträger nach einem der vorherigen Ansprüche, **dadurch gekennzeichnet, dass** das erste Garn aus HMLS-PET einen Kristallisationsgrad von 45 bis 53,5 % aufweist.

5. Gummierter Festigkeitsträger nach einem der vorherigen Ansprüche, **dadurch gekennzeichnet, dass** das erste Garn aus HMLS-PET eine Feinheit von 300 bis 4000 Den (entspricht 333,333 bis 4444,444 dTex), bevorzugt 300 bis 3100 Den (entspricht 333,333 bis 3444,444 dTex), besonders bevorzugt 300 bis 2000 Den (entspricht 333,333 bis 2222,222 dTex), ganz besonders bevorzugt 900 bis 2000 Den (entspricht 1000 bis 2222,222 dTex), aufweist.

6. Gummierter Festigkeitsträger nach einem der vorherigen Ansprüche, **dadurch gekennzeichnet, dass** das erste Garn aus HMLS-PET einen Heißschrumpf von kleiner als 8 % und eine Dehnung bei 45 N von weniger als 0,0056 %/Den (entspricht 0,00504 %/dTex) bei Filamentfeinheiten von weniger als 5 Den aufweist.

7. Gummierter Festigkeitsträger nach einem der vorherigen Ansprüche, **dadurch gekennzeichnet, dass** der Cord aufweist

   - einen Twistfaktor von 170 bis 230;
   und/oder
   - eine Bruchkraft von 6,3 bis 10 g/Den (entspricht 5,67 bis 9 g/dTex); und/oder
   - eine Dehnung bei 45 N von 0,0005 bis 0,0040 %/Den (entspricht 0,00045 bis 0,0036 %/dTex);
   und/oder
   - einen Heißschrumpf von 1,5 bis 2,5 %.

8. Verfahren zur Herstellung des gummierten Festigkeitsträgers nach Anspruch 1, welches wenigstens die folgenden Verfahrensschritte umfasst:

   a) Bereitstellung von PET-Chips, welche 100 Gew.-% recyceltes PET aus PET-Flaschen oder anderen PET-Erzeugnissen umfassen und optional Bereitstellung von Chips aus originärem PET;
   b) Vorkristallisation, Kristallisation und Festphasen-Polymerisation des PET aus Schritt a), wodurch hochviskose PET-Chips mit einer intrinsischen Viskosität von 0,85 bis 1,15 dl/g erhalten werden;
   c) Trocknen, optional Mischen der Chips aus recyceltem PET mit Chips aus originärem PET, womit PET-Chips erhalten werden, die zu 10 bis 100 Gew.-% Chips aus recyceltem PET umfassen, Schmelzen und Extrudieren der PET-Chips für das Garnspinnen, anschließendes Garnspinnen mittels einer Spinndüse umfassend eine Nachheizung mit einer Pufferzone der hochviskosen PET-Chips aus Schritt b), und schrittweises Abkühlen des unverstreckten Garns, wobei der Wassergehalt der Chips nach dem Trocknen weniger als 30 ppm beträgt, die Temperatur der Nachheizung unterhalb der Spinndüse 280 bis 350 °C beträgt und die Länge der Pufferzone unter der Nachheizung während des schrittweise Abkühlens 20 bis 100 mm beträgt;
   d) Ölen, Ziehen, Wärmeaushärten und Wickeln nach dem schrittweisen Abkühlen in Schritt c), wodurch ein HMLS-PET-Garn erhalten wird;
   e) Verdrehen;
   f) Optional Weben;
   g) Haftungsausrüsten mit einem Dip;
   h) Gummierung mit einer Gummierungsmischung.

9. Fahrzeugreifen, aufweisend wenigstens einen gummierten Festigkeitsträger nach einem der Ansprüche 1 bis 7.

10. Fahrzeugreifen nach Anspruch 9, **dadurch gekennzeichnet, dass** er eine Vielzahl an gummierten Festigkeitsträgern nach einem der Ansprüche 1 bis 7 in einer Festigkeitsträgerlage aufweist.

11. Fahrzeugreifen nach Anspruch 10, **dadurch gekennzeichnet, dass** die Festigkeitsträgerlage zumindest die Karkasslage und/oder eine Gürtelbandage und/oder eine Gürtellage und/oder ein Wulstverstärker ist.

12. Fahrzeugreifen nach Anspruch 11, **dadurch gekennzeichnet, dass** die Festigkeitsträgerlage zumindest die Karkasslage ist, wobei die Karkasslage im Rahmen eines Lagenumschlages einmal (Ein-Lagen-Konstruktion) oder zweimal (Zwei-Lagen-Konstruktion) um den Wulst geführt ist, wobei das Ende der Lage bzw. Lagen zwischen Kern und Gürtelkante liegt.

**Claims**

1. Rubberized strength member for elastomeric products, especially vehicle tyres, where the strength member includes at least one first yarn and one second yarn, and the first yarn is a yarn of HMLS-PET comprising recycled PET, **characterized in that** the first yarn is twisted with the second yarn in a x2 cord, where the cord has a twist factor of 150 to 250 and a breaking force of at least 6.3 g/den (equivalent to 5.67 g/dtex) and has an elongation at 45 N of less than 0.0056%/den (equivalent to 0.00504%/dtex) and hot shrinkage of less than 3%.

2. Rubberized strength member according to Claim 1, **characterized in that** the first yarn of HMLS-PET comprises 10% to 100% by weight, preferably 30% to 100% by weight, more preferably 50% to 100% by weight, of recycled PET.

3. Rubberized strength member according to either of Claims 1 and 2, **characterized in that** the first yarn of HMLS-PET includes 0.12% to 5% by weight, especially 0.12% to 2.2% by weight, of isophthalic acid (IPA).

**4.** Rubberized strength member according to any of the preceding claims, **characterized in that** the first yarn of HMLS-PET has a crystallization level of 45% to 53.5%.

**5.** Rubberized strength member according to any of the preceding claims, **characterized in that** the first yarn of HMLS-PET has a fineness of 300 to 4000 den (equivalent to 333.333 to 4444.444 dtex), preferably 300 to 3100 den (equivalent to 333.333 to 3444.444 dtex), more preferably 300 to 2000 den (equivalent to 333.333 to 2222.222 dtex), most preferably 900 to 2000 den (equivalent to 1000 to 2222.222 dtex).

**6.** Rubberized strength member according to any of the preceding claims, **characterized in that** the first yarn of HMLS-PET has hot shrinkage of less than 8% and an elongation at 45 N of less than 0.0056%/den (equivalent to 0.00504%/dtex) in the case of filament finenesses of less than 5 den.

**7.** Rubberized strength member according to any of the preceding claims, **characterized in that** the cord has

- a twist factor of 170 to 230;
and/or
- a breaking force of 6.3 to 10 g/den (equivalent to 5.67 to 9 g/dtex);
and/or
- an elongation at 45 N of 0.0005 to 0.0040%/den (equivalent to 0.00045 to 0.0036%/dtex);
and/or
- hot shrinkage of 1.5 to 2.5%.

**8.** Process for producing the rubberized strength member according to Claim 1, comprising at least the following process steps:

a) providing PET chips comprising 100% by weight of recycled PET from PET bottles or other PET products and optionally providing chips of virgin PET;
b) pre-crystallization, crystallization and solid-state polymerization of the PET from step a) to give high-viscosity PET chips having an intrinsic viscosity of 0.85 to 1.15 dl/g;
c) drying and optionally mixing the chips of recycled PET with chips of virgin PET to obtain PET chips comprising 10% to 100% by weight of chips of recycled PET, melting and extruding the PET chips for the yarn spinning, then yarn spinning by means of a spinneret comprising a reheater having a buffer zone for the high-viscosity PET chips from step b), and stepwise cooling of the unstretched yarn, wherein the water content of the chips after drying is less than 30 ppm, the temperature of the reheater beneath the spinneret is 280°C to 350°C and the length of the buffer zone beneath the reheater during the stepwise cooling is 20 to 100 mm;
d) oiling, drawing, heat-setting and winding after the stepwise cooling in step
c) to obtain an HMLS-PET yarn;
e) twisting;
f) optionally weaving;
g) modification of adhesion with a dip;
h) rubberization with a rubberization mixture.

**9.** Vehicle tyre including at least one rubberized strength member according to any of Claims 1 to 7.

**10.** Vehicle tyre according to Claim 9, **characterized in that** it includes a multitude of rubberized strength members according to any of Claims 1 to 7 in a strength member ply.

**11.** Vehicle tyre according to Claim 10, **characterized in that** the strength member ply is at least the carcass ply and/or a belt bandage and/or a belt ply and/or a bead reinforcement.

**12.** Vehicle tyre according to Claim 11, **characterized in that** the strength member ply is at least the carcass ply, where the carcass ply is run around the bead once (one-ply construction) or twice (two-ply construction) in a turnup, where the end of the ply/plies lies between the core and the edge of the belt.

**Revendications**

**1.** Renforcement caoutchouté pour produits élastomères, en particulier des pneumatiques de véhicule, le renforcement présentant au moins un premier et un deuxième fil, le premier fil étant un fil en HMLS-PET, qui comprend du PET recyclé, **caractérisé en ce que** le premier fil se trouve sous forme torsadée dans cordon x2 avec le deuxième fil, le cordon présentant un facteur de torsadage de 150 à 250 et une force de rupture d'au moins 6,3 g/den (correspondant à 5,67 g/dtex) et un allongement à 45 N inférieur à 0,0056 %/den (correspondant à 0,00504 %/dtex) et un retrait à la chaleur inférieur à 3%.

2. Renforcement caoutchouté selon la revendication 1, **caractérisé en ce que** le premier fil en HMLS-PET comprend 10 à 100% en poids, de préférence 30 à 100% en poids, de manière particulièrement préférée 50 à 100% en poids de PET recyclé.

3. Renforcement caoutchouté selon l'une des revendications 1 ou 2, **caractérisé en ce que** le premier fil en HMLS-PET présente 0,12 à 5% en poids, en particulier 0,12 à 2,2% en poids, d'acide isophtalique (IPA).

4. Renforcement caoutchouté selon l'une des revendications précédentes, **caractérisé en ce que** le premier fil en HMLS-PET présente un degré de cristallisation de 45 à 53,5%.

5. Renforcement caoutchouté selon l'une des revendications précédentes, **caractérisé en ce que** le premier fil en HMLS-PET présente une finesse de 300 à 4000 den (correspondant à 333,333 à 4444,444 dtex), de préférence de 300 à 3100 den (correspondant à 333,333 à 3444,444 dtex), de manière particulièrement préférée de 300 à 2000 den (correspondant à 333,333 à 2222,222 dtex), de manière tout particulièrement préférée de 900 à 2000 den (correspondant à 1000 à 2222,222 dtex).

6. Renforcement caoutchouté selon l'une des revendications précédentes, **caractérisé en ce que** le premier fil en HMLS-PET présente un retrait à la chaleur inférieur à 8% et un allongement à 45 N inférieur à 0,0056 %/den (correspondant à 0,00504 %/dtex) à des finesses de filament inférieures à 5 den.

7. Renforcement caoutchouté selon l'une des revendications précédentes, **caractérisé en ce que** le cordon présente

   - un facteur de torsadage de 170 à 230 ;
   et/ou
   - une force de rupture de 6,3 à 10 g/den (correspondant à 5,67 à 9 g/dtex) ; et/ou
   - un allongement à 45 N de 0,0005 à 0,0040 %/den (correspondant à 0,00045 à 0,0036 %/dtex) ;
   et/ou
   - un retrait à la chaleur de 1,5 à 2,5%.

8. Procédé de fabrication du renforcement caoutchouté selon la revendication 1, comprenant au moins les étapes suivantes :

   a) mise à disposition de granules de PET qui comprennent 100% en poids de PET recyclé provenant de bouteilles en PET ou d'autres produits en PET et éventuellement mise à disposition de granules de PET originel ;
   b) précristallisation, cristallisation et polymérisation en phase solide du PET provenant de l'étape a), suite à quoi on obtient des granules de PET de haute viscosité présentant une viscosité intrinsèque de 0,85 à 1,15 dl/g ;
   c) séchage, éventuellement mélange des granules de PET recyclé avec des granules de PET original, suite à quoi on obtient des granules de PET qui comprennent, à raison de 10 à 100% en poids, des granules de PET recyclé, fusion et extrusion des granules de PET pour le filage de fil, ensuite filage de fil au moyen d'une filière comprenant un postchauffage avec une zone tampon des granules de PET de haute viscosité provenant de l'étape b) et refroidissement graduel du fil non étiré, la teneur en eau des granules après le séchage étant inférieure à 30 ppm, la température du postchauffage au-dessous de la filière étant de 280 à 350°C et la longueur de la zone tampon sous le postchauffage pendant le refroidissement graduel étant de 20 à 100 mm ;
   d) huilage, étirage, thermodurcissement et bobinage après le refroidissement graduel dans l'étape c), suite à quoi on obtient un fil en HMLS-PET ;
   e) torsadage ;
   f) tissage éventuel ;
   g) traitement d'adhérence par une immersion ;
   h) caoutchoutage avec un mélange de caoutchoutage.

9. Pneumatique de véhicule, présentant au moins un renforcement caoutchouté selon l'une des revendications 1 à 7.

10. Pneumatique de véhicule selon la revendication 9, **caractérisé en ce qu'**il comprend une pluralité de renforcements caoutchoutés selon l'une des revendications 1 à 7 dans une couche de renforcement.

11. Pneumatique de véhicule selon la revendication 10, **caractérisé en ce que** la couche de renforcement est au moins la couche de carcasse et/ou une bande de ceinture et/ou une couche de ceinture et/ou un renfort de talon.

12. Pneumatique de véhicule selon la revendication 11, **caractérisé en ce que** la couche de renforcement est au moins la couche de carcasse, la couche de carcasse, dans le cadre d'un retournement des plis, étant guidée une fois (construction à une couche) ou deux fois (construction à deux couches) autour du talon, l'extrémité de la couche ou des couches se trouvant entre le noyau et le bord de ceinture.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010017107 A1
- CN 108084424 A
- DE 102014211362 A1
- WO 2019015792 A1